## Europäisches Patentamt
## European Patent Office
## Office européen des brevets

(11) Veröffentlichungsnummer: **0 385 160 A1**

# EUROPÄISCHE PATENTANMELDUNG

(21) Anmeldenummer: **90102645.0**

(51) Int. Cl.5: **F16F 15/32**

(22) Anmeldetag: **10.02.90**

(30) Priorität: **28.02.89 DE 3906115**

(43) Veröffentlichungstag der Anmeldung:
**05.09.90 Patentblatt 90/36**

(84) Benannte Vertragsstaaten:
**AT DE ES FR GB IT SE**

(71) Anmelder: **GKN CARDANTEC INTERNATIONAL GESELLSCHAFT FUR ANTRIEBSTECHNIK MBH**
**Westendhof 5**
**D-4300 Essen 1(DE)**

(72) Erfinder: **Schlonski, Albrecht, Dr, Ing.**
**An der Seilerei 26**
**D-4300 Essen(DE)**
Erfinder: **Schedrat, Kurt, Dr., Ing.**
**Am Teckenberg 27**
**D-4030 Ratingen 6(DE)**
Erfinder: **Faulbecker, Gerd**
**Wolfskuhle 25**
**D-4320 Hattingen 16(DE)**
Erfinder: **Ende, Eberhard**
**Im Stillen Winkel 60**
**D-4300 Essen 1(DE)**

(74) Vertreter: **Harwardt, Günther, Dipl.-Ing. et al**
**HARWARDT NEUMANN PATENTANWÄLTE**
**Scheerengasse 2 Postfach 1455**
**D-5200 Siegburg 2(DE)**

(54) **Befestigung eines Wuchtgewichtes an einer rotierende Welle, insbesondere an einer Kreuzgelenkwelle.**

(57) Die Erfindung betrifft die Fixierung eines Wuchtgewichtes 10 auf einer rotierenden Welle, beispielsweise in Form des Verbindungsrohres 9 einer Kreuzgelenkwelle, wobei zur Festlegung ein Schrumpfschlauch 11 und ggfs. zusätzlich ein zunächst über den Außenumfang und das Wuchtgewicht 10 gewikkeltes glasfaserverstärktes Klebeband 13 vorgesehen ist, über welches der Schrumpfschlauch 11 geschoben und nach Erwärmung festsitzend angebracht ist. Von Vorteil bei einer solchen Art der Fixierung ist, daß keine Einwirkung aus der Fixierung des Wuchtgewichtes auf die rotierende Welle resultiert, so daß die volle Festigkeit erhalten bleibt. Außerdem wird durch die Anordnung verhindert, daß Korrosion eintritt.

Fig. 3

EP 0 385 160 A1

Die Erfindung betrifft die Befestigung eines oder mehrerer Wuchtgewichte an einer rotierenden Welle, insbesondere einer Kreuzgelenkwelle.

Bei rotierenden Wellen, insbesondere Gelenkwellen, ist es bekannt, als Wuchtgewichte Blechstreifen vorzusehen und diese durch Punktschweißung in der Nähe der Gelenke, insbesondere an dem Verbindungsrohr, zu befestigen. Die Befestigung der Auswuchtgewichte bedeutet in fast allen Fällen eine Verminderung der Festigkeit des betroffenen Bauteiles, insbesondere wenn mehrere Schweißpunkte vorgesehen sind. Die Schweißpunkte bilden bei einem durchgehenden Blechstreifen Anrißpunkte unter Belastung. Darüberhinaus besteht die Gefahr, daß sich die Wuchtgewichte unter Drehmoment lösen, da eine Verformung stattfindet. Das Bauteil, an dem die Wuchtblechstreifen befestigt sind, wird aufgrund der Drehmomentübertragung tordiert und erfährt eine Verformung, welche sich auch auf die Befestigungspunkte für den Blechstreifen überträgt und diese auf Scherung beansprucht.

Hiervon ausgehend liegt der Erfindung die Aufgabe zugrunde, eine Befestigung von Wuchtgewichten an rotierenden Wellen, insbesondere an Kreuzgelenkwellen, vorzuschlagen, die keinen negativen Einfluß bei Anordnung an der einem Drehmoment unterliegenden rotierenden Welle hinsichtlich der Dauerfestigkeit der Anordnung und der der Welle selbst hat. Die Dauerfestigkeit soll vielmehr erhöht werden.

Diese Aufgabe wird erfindungsgemäß dadurch gelöst, daß zur Fixierung des/der Wuchtgewichte auf der Außenfläche der Welle ein beide übergreifender Schrumpfschlauch vorgesehen ist.

Von Vorteil bei dieser Ausbildung ist, daß durch Wärmebeaufschlagung des Schrumpfschlauches dieser aufgrund des Memoryeffektes des Werkstoffes seinen ursprünglichen Durchmesser wieder einnimmt und damit das/die Wuchtgewichte fest an die Außenfläche der Welle anpreßt. Hierdurch werden die Wuchtgewichte in ihrer Position gehalten.

Zur Erzielung einer Fixierung auch bei hohen Drehzahlen des auszuwuchtenen Rotors bzw. der Kreuzgelenkwelle ist vorgesehen, daß/die Wuchtgewichte zusätzlich von einem zwischen dem Schrumpfschlauch und den Wuchtgewichten angeordneten Klebeband fixiert sind. Durch diese Maßnahme wird darüberhinaus eine einfachere Fixierung der Wuchtgewichte während des Wuchtvorganges erreicht. Der Schrumpfschlauch wird erst anschließend über die Einheit aus Klebeband und Wuchtgewichten geschoben und sodann die innige Verbindung durch Schrumpfen des Schlauches hergestellt. Damit ist auch gleichzeitig der Vorteil verbunden, daß der Schrumpfschlauch das Klebeband gegen die Gefahr des Abrollens bei längerer Gebrauchsdauer oder Einwirkung von außen sichert.

Bevorzugt ist vorgesehen, daß der Schrumpfschlauch das/die Wuchtgewichte seitlich überragt. Hierduch wird zusätzlich ein hermetischer Abschluß erreicht, so daß auch eine Unterrostung vermieden wird.

Nach einem weiteren Merkmal der Erfindung ist ein aus PVC (Polyvinylchlorid), Polyäthylen oder Teflon bestehender Schrumpfschlauch vorgesehen.

Solche Schrumpfschläuche sind in der Regel für Drehzahlen des Rotors bis ca. 2500 Umdrehungen pro Minute ausreichend, um das Wuchtgewicht in seiner Lage zu fixieren. Zur Erzielung hoher Festigkeiten für die Sicherung des Wuchtgewichtes ist in weiterer Ausgestaltung der Erfindung vorgesehen, daß das Klebeband glasfaserverstärkt ist. Dabei sind die Glasfasern vorzugsweise als Fäden ausgebildet und in Wickelrichtung bzw. Drehrichtung orientiert. Durch eine solche Maßnahme werden die Fasern nur auf Zug beansprucht. Sie weisen für eine solche Beanspruchung eine besonders hohe Festigkeit auf.

Ein wesentlicher Vorteil der Verwendung von glasfaserverstärkten Klebeband besteht darin, daß dies eine hohe Reißfestigkeit bei hohem Elastizitätsmodul besitzt. Es ist also in der Lage das Wuchtgewicht auch bei hohen Drehzahlen zu fixieren. Durch eine solche kombinierte Maßnahme wird der Schrumpfschlauch weniger belastet.

Zur Erzielung der erfindungsgemäßen Befestigung ist ein Verfahren vorgesehen, daß dadurch gekennzeichnet ist, daß beim Wuchten das/die Wuchtgewichte zunächst nur durch Umwickeln mit einem Klebeband fixiert werden, und das anschließend der Schrumpfschlauch darübergeschoben und erwärmt wird.

Bevorzugt wird der Schrumpfschlauch zur Durchmesserreduzierung durch Heißluft oder Wärmestrahler erwärmt.

Es ist auch möglich, die Erwärmung im Durchlaufofen vorzunehmen.

Ein bevorzugtes Ausführungsbeispiel der Erfindung ist in der Zeichnung schematisch dargestellt.

Es zeigt

Figur 1 eine Kreuzgelenkwelle, teilweise geschnitten,

Figur 2 nur die Befestigung eines durch einen Schrumpfschlauch gehaltenen Wuchtgewichtes als Detail im vergrößerten Maßstab und

Figur 3 die Befestigung durch einen Schrumpfschlauch und ein Klebeband als Detail, teilweise geschnitten, im vergrößerten Maßstab im Verhältnis zu dem gemäß Figur 1.

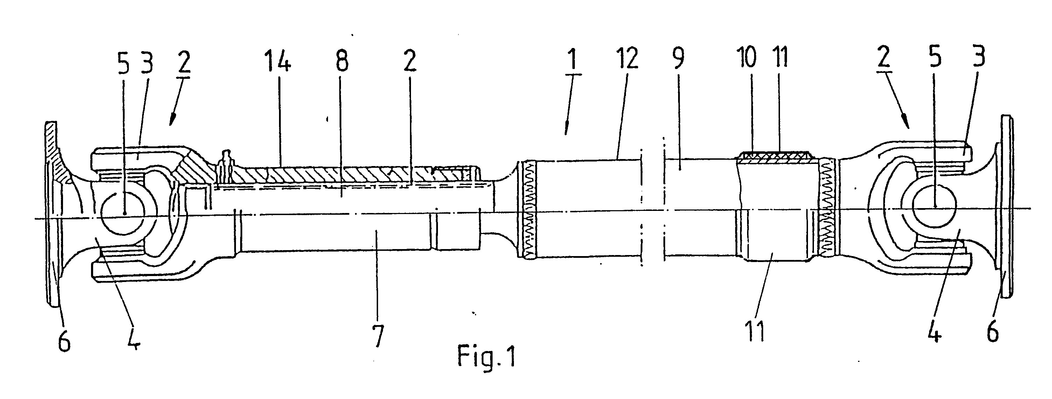

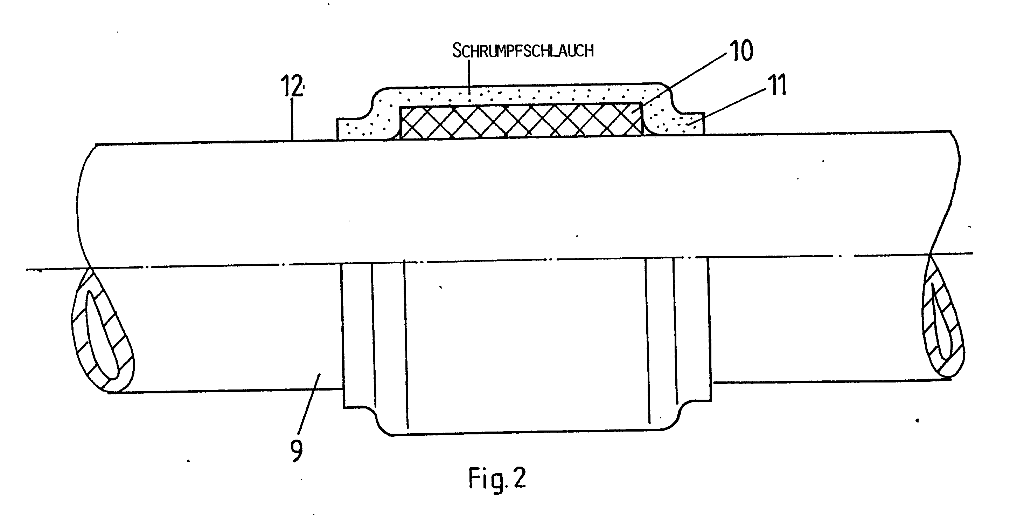

In den Figuren 1 und 2 ist eine Kreuzgelenkwelle 1 dargestellt, welche mit Wuchtblechen 10 nach der Erfindung versehen ist. Die Kreuzgelenkwelle 1 besteht aus zwei Kreuzgelenken 2, welche durch eine Verbindungswelle miteinander drehfest, aber eine Relativverstellung zulassend, verbunden sind. Dies Kreuzgelenke 2 bestehen aus einer inneren Gelenkgabel 3 und einer äußeren Gelenkgabel 4. Die beiden Gelenkgabeln 3,4 sind über ein Gelenkkreuz 5 miteinander scharnierbar in zwei Ebenen verbunden. Die äußere Gelenkgabel 4 besitzt einen Flansch 6, der zum Anschluß an ein treibendes oder getriebenes Maschinenteil oder Fahrzeugteil dient. Die beiden inneren Gelenkgabeln 3 sind mit Bauteilen, die zur Verbindungswelle gehören, verbunden. So ist eine der inneren Gelenkgabeln 3 Bestandteil eines Verschiebaußenteils 7. Dieses weist in seiner Bohrung ein Keilprofil auf, in welchem ein Verschiebeinnenteil 8, das eine dazu passende Teilverzahnung auf seiner Außenfläche besitzt, drehfest, aber axial verschiebbar aufgenommen ist. Unter Zwischenschaltung eines Verbindungsrohres 9 ist das Verschiebeinnenteil 8 mit der anderen Innengabel 3 verbunden. Das Verbindungsrohr 9 dient in der Regel zur Anpassung der Länge der Kreuzgelenkwelle 1 an den jeweiligen Anwendungsfall.

Die Kreuzgelenkwelle 1 wird nach der Montage gewuchtet, um die erforderliche Rundlaufqualität, die für den jeweiligen Anwendungsfall gefordert ist, zu erreichen. Hierzu dienen Gewichte in Form von Wuchtblechen 10, von denen vorzugsweise eines oder mehrere dem Verbindungsrohr 9 oder dem Verschiebaußenteil 7 zugeordnet werden.

Wie aus den Zeichnungsfiguren 1 und 2 ersichtlich, ist das Wuchtgewicht 10 über einen Schrumpfschlauch 11 auf der Außenfläche 12 des Verbindungsrohres 9 der Kreuzgelenkwelle 1, welche die drehende Welle darstellt, festgelegt. Es ist erkennbar, daß der Schrumpfschlauch 11 das Wuchtgewicht 10 seitlich überragt und mit diesen Seitenabschnitten dicht auf der Außenfläche 12 anliegt.

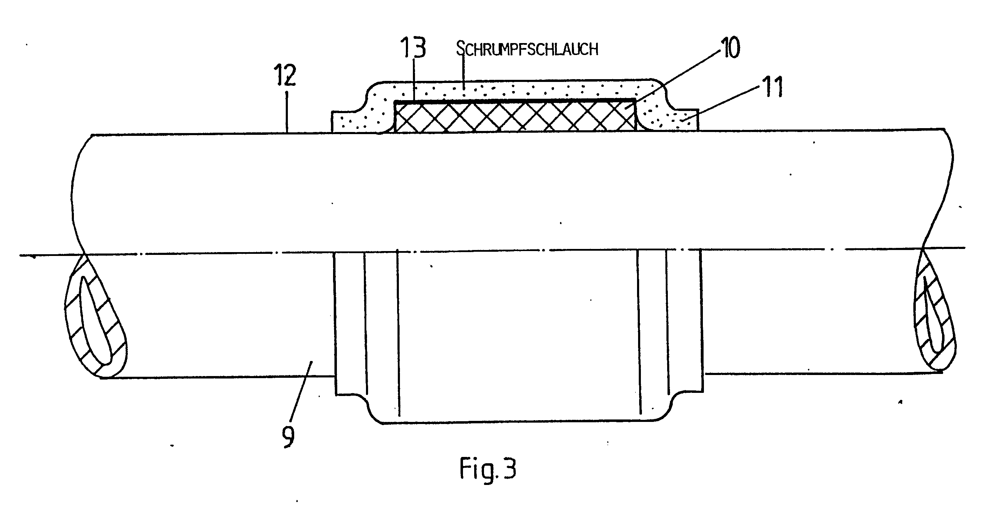

Bei der Ausführungsform nach Figur 3 ist zusätzlich zum Schrumpfschlauch 11 ein Klebeband 13 vorgesehen, welches als glasfaserverstärktes Klebeband ausgebildet ist. Die Fasern sind als Fäden ausgebildet und in Umfangsrichtung, d.h. in Drehrichtung um den Umfang der Außenfläche 12 und über das Wuchtgewicht 10 verlaufend ausgerichtet. Bei Rotation der Kreuzgelenkwelle 1 wird die auf das Wuchtgewicht 10 einwirkende Fliehkraft in eine Zugkraft in den Fasern des Klebebandes 13 umgesetzt. Der Schrumpfschlauch 11 selbst übernimmt ebenfalls teilweise die Fixierung des Wuchtgewichtes 10, schützt aber zusätzlich noch das Klebeband 13 gegen unbeabsichtigtes Aufrollen bei längerem Gebrauch und das Wuchtgewicht 10 gegen Korrosion.

Es ist auch möglich, daß Wuchtgewicht 10 über einen Schrumpfschlauch 11 und ggfs. das Klebeband 13 in der Nähe des dem Verschiebaußenprofil 7 zugeordneten Gelenkes 2 anzuordnen.

Der Verfahrensablauf für die Herstellung der Befestigung ist wie folgt:

Zunächst wird auf der Wuchtbank die Unwucht festgestellt. Anschließend wird in der richtigen Position ein Wuchtgewicht 10 über ein Klebeband 13 festgelegt. Gegebenenfalls wird dieser Wuchtvorgang dann noch einmal wiederholt und eine Korrektur vorgenommen. Anschließend wird der aufgeweitete Schrumpffolienschlauchabschnitt über das durch das Klebeband 13 fixierte Wuchtgewicht 10 geschoben und erwärmt. Dabei nimmt der Schrumpfschlauch 11 seinen ursprünglichen Durchmesser wieder ein und preßt sich eng an die Außenfläche 12 des Verbindungsrohres 9 und den mit dem Klebeband 13 umwickelten Abschnitt mit den eingeschlossenen Wuchtgewicht 10 an.

Bezugszeichenliste

1 Kreuzgelenkwelle
2 Gelenk
3 Gelenkgabel
4 Gelenkgabel
5 Gelenkkreuz
6 Flansch
7 Verschiebeaußenteil
8 Verschiebeinnenteil
9 Verbindungsrohr
10 Wuchtgewicht
11 Schrumpfschlauch
12 Außenfläche des Verbindungsrohres
13 Klebeband
14 Außenfläche des Verschiebeaußenteiles

Ansprüche

1. Befestigung eines oder mehrerer Wuchtgewichte an einer rotierenden Welle, insbesonderer einer Kreuzgelenkwelle,
dadurch gekennzeichnet,
daß zur Fixierung des/der Wuchtgewichte (10) auf der Außenfläche (12,14) der Welle (7,9) ein beide übergreifender Schrumpfschlauch (11) vorgesehen ist.

2. Befestigung nach Anspruch 1,
dadurch gekennzeichnet,
daß das/die Wuchtgewichte (10) zusätzlich von einem zwischen dem Schrumpfschlauch (11) und den Wuchtgewichten (10) angeordnetes Klebeband (13) fixiert sind.

3. Befestigung nach Anspruch 1,
dadurch gekennzeichnet,
daß der Schrumpfschlauch (11) das/die Wuchtgewichte (10) seitlich überragt.

4. Befestigung nach Anspruch 1,

dadurch gekennzeichnet,
daß der Schrumpfschlauch (11) aus PVC, Polyäthylen oder Teflon besteht.

5. Befestigung nach Anspruch 2,
dadurch gekennzeichnet,
daß das Klebeband (13) glasfaserverstärkt ist.

6. Verfahren zur Herstellung einer Befestigung eines oder mehrerer Wuchtgewichte nach einem oder mehreren der Ansprüche 1 - 5,
dadurch gekennzeichnet,
daß beim Wuchten das/die Wuchtgewichte (10) zunächst nur durch Umwickeln mit einem Klebeband (13) fixiert werden, und daß anschließend der Schrumpfschlauch (11) über beide geschoben und erwärmt wird.

7. Verfahren nach Anspruch 6,
daduch gekennzeichnet,
daß die Erwärmung des Schrumpfschlauches (11) durch Heißluft oder Wärmestrahler erfolgt.

Fig.1

EP 0 385 160 A1

SCHRUMPFSCHLAUCH

12

10

11

9

Fig. 2

Fig.3

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.) |
|---|---|---|---|
| A | <u>GB - A - 2 041 159</u><br>(GKN GROUP SERVICES LTD)<br>* Gesamt *<br>-- | 1,2 | F 16 F 15/32 |
| A | <u>DE - A1 - 3 035 437</u><br>(GEBR. HOFMANN GMBH & CO KG MASCHINENFABRIK)<br>---- | 1 | |

RECHERCHIERTE SACHGEBIETE (Int. Cl.)

F 16 F 15/00

Der vorliegende Recherchenbericht wurde für alle Patentansprüche erstellt.

| Recherchenort | Abschlußdatum der Recherche | Prüfer |
|---|---|---|
| WIEN | 15-05-1990 | PIRKER |